# EUROPÄISCHE PATENTSCHRIFT

(11) **EP 1 834 917 B1**
(45) Veröffentlichungstag und Bekanntmachung des Hinweises auf die Patenterteilung: **20.05.2015**
(21) Anmeldenummer: 06015656.9
(22) Anmeldetag: 27.07.2006
(51) Int. Cl.: H02P 25/22, B66B 5/16, H02P 27/06, H02K 3/28, H02K 5/22, H02K 11/00, B66B 11/04, H02K 16/04

(54) **Aufzugantrieb mit einem Elektromotor**
Elevator system with an electric motor
Système d'ascenseur avec un moteur électrique

(30) Priorität: 16.03.2006 EP 06005374
(43) Veröffentlichungstag der Anmeldung: 19.09.2007
(73) Patentinhaber: ThyssenKrupp Aufzugswerke GmbH, 73765 Neuhausen a.d.F. (DE)
(72) Erfinder: Herrmann, Günther, 73669 Lichtenwald (DE); Breidenstein, Olaf, 90449 Nürnberg (DE); Gessner, Thorsten, 40885 Ratingen-Lintorf (DE)
(74) Vertreter: m patent group

(56) Entgegenhaltungen:
- EP-A- 0 678 968
- DE-A1-102004 002 570
- JP-A- 11 187 613
- JP-A- 2004 072 845
- JP-A- 2005 039 932
- JP-A- 2005 304 119

## Beschreibung

Die Erfindung betrifft einen Aufzugantrieb mit einem Elektromotor und einer Anzahl an Segmenten.

Bei Elektromotoren für Aufzugantriebe werden permanenterregte Synchronmotoren, die bspw. einzahnbewickelt sind, eingesetzt. Hierbei haben sich insbesondere getriebelose Antriebe bewährt. Diese Motoren zeichnen sich dadurch aus, dass sie eine Anzahl an Segmenten bzw. Drehstromsegmenten aufweisen, wobei diese Segmente regelmäßig elektromagnetisch nicht oder nur sehr gering gekoppelt sind. Somit wirkt eine Flussverkettung nur auf das eigene und nicht auf benachbarte Segmente.

Bei in Aufzugantrieben eingesetzten Elektromotoren ist es üblich, dass diese mit einem ihrer Leistung entsprechenden Umrichter betrieben werden. Dies bedeutet, dass jeweils für einen Aufzugantrieb ein Umrichter eingesetzt wird. Bei größeren Aufzugleistungen ist derzeit vorgesehen, dass mehrere Antriebe, die jeweils von einem Umrichter betrieben werden, auf eine Motorwelle wirken oder dass mehrere Antriebe unabhängig voneinander gleichzeitig und nebeneinander den Aufzug bewegen.

Die herkömmliche Vorgehensweise ist aber auch hinsichtlich der Verfügbarkeit des Aufzugs problematisch. Bei Störungen, die durch einen defekten Umrichter verursacht werden, kommt der Aufzug zum Stillstand. Dies ist bspw. auch der Fall, wenn die Motorwicklung ausfällt.

Wirken mehrere Antriebe auf eine Welle, führt dies dazu, dass die Baulänge der Antriebseinheit und damit der Platzbedarf für den Antrieb stark zunimmt. Es ist daher erforderlich, zusätzlichen Raum im Schacht zur Verfügung zu stellen, um diesem erhöhten Platzbedarf zu entsprechen. Dazu müssen die Antriebe besonders synchronisiert werden und es besteht die Gefahr des ungleichmäßigen Antriebs der Welle entlang ihrer Länge.

Die JP 2003-306279 A zeigt einen Aufzugantrieb mit zwei Windungen, denen jeweils ein Umrichter zugeordnet ist.

Es stellt sich somit die Aufgabe, einen Antrieb für einen Aufzug bzw. einen Elektromotor für einen solchen Antrieb bereitzustellen, der einen ausfallsicheren Betrieb gewährleistet. Weiterhin sollen die Herstellungskosten besonders bei einem getriebelosen Aufzugantrieb, gesenkt werden. Im Betrieb sollen Energieverluste gering sein, so dass ein hoher Wirkungsgrad erreicht wird.

Der erfindungsgemäße Aufzugantrieb weist einen Elektromotor auf, der in eine Anzahl an Segmenten unterteilt ist, wobei jedem Segment ein Umrichter zugeordnet ist.

Da, wie vorstehend ausgeführt wurde, eine Flussverkettung nicht auf benachbarte Segmente wirkt, kann jedes Segment auf einfache Weise mit einem separaten Regelgerät, in diesem Fall einem Umrichter, betrieben werden.

Legt man eine bestimmte Leistung eines Umrichters zugrunde, so wird es möglich, mit einer einzigen Leistungsklasse eines Umrichters einen weiten Motorleistungsbereich abzudekken. Dieser Leistungsbereich reicht dann bis einem Vielfachen dessen, was der möglichen Anzahl an Segmenten im Motor entspricht. So können bspw. acht Segmente in einem Motor vorhanden sein, d.h. die Motorleistung kann mit einer ent-sprechenden Anzahl an Umrichtern einer niedrigeren Frequenzumrichterleistungsklasse erreicht werden.

Die meisten Aufzugantriebe liegen in dem Bereich von etwa 3 kW bis 24 kW, was mit einer entsprechenden Anzahl an 3kW-Umrichtern abgedeckt werden kann. Da 3 kW-Umrichter in sehr hohen Stückzahlen hergestellt werden, kann ein kostengünstiges Gesamtsystem realisiert werden. Weiterhin ist zu beachten, dass Umrichter verhältnismäßig geringer Baugröße direkt am Motor angebaut werden können.

In Ausgestaltung weist der Aufzugantrieb einen Elektromotor mit einem Rotor und einem Stator auf, wobei der Stator in eine Anzahl an Segmenten unterteilt ist und jedem Segment ein Umrichter zugeordnet ist. Dabei wirkt üblicherweise der Rotor auf eine Welle. Das Motorprinzip ist so gestaltet, dass es möglich ist, einen Aufzugdirektantrieb an mehreren Umrichtern zu betreiben. Der Wicklungsaufbau der Statorwicklung ist dabei derart, dass ein Ausfall einer Spule nicht zwangsläufig zu einem Ausfall der Aufzuganlage führt.

Der erfindungsgemäße Aufzugantrieb ist insbesondere als Direktantrieb und somit getriebelos ausgebildet.

Der Stator ist typischerweise in Umfangsrichtung in Segmente bzw. Sektoren unterteilt.

Als Elektromotor für den Antrieb eignet sich ein permanenterregter, bspw. bürstenloser, einzahnbewickelter Synchronmotor. Der Rotor ist somit mit einer Anzahl an Permanentmagneten bestückt. Somit ist jede Spule der Statorwicklung in konzentrierter Form ausgebildet. Die einzelnen Spulen der Statorwicklung können parallel oder in Reihe zu einem Wicklungsstrang verschaltbar sein.

In Ausgestaltung der Erfindung sind die einzelnen Segmente galvanisch voneinander getrennt. Der von den Permanentmagneten erzeugte Fluss ist typischerweise über Polschuhe geführt.

Die Anordnung der Magnete im Rotor bilden vorzugsweise zusammen mit zwischen ihnen angeordneten Polschuhen eine Flusskonzentration für den Magnetfluss aus.

Das Magnetfeld der einzelnen Segmente breitet sich vorzugsweise nur im Bereich des Segments aus und erzeugt in dem einzelnen Segment ein Drehmoment.

Die einzelnen Segmente können je nach Anforderung beliebig parallel oder in Reihe miteinander verschaltbar und dann mit einem Umrichter zu betreiben sein.

Der erfindungsgemäße Aufzugantrieb ist derart aufgebaut, dass dieser in einzelne Segmente aufgeteilt werden kann, wobei jedem Segment ein Umrichter zugeordnet ist. Über eine geeignete Auswahl des Verhältnisses Magnetpole zu Statornuten in Zusammenhang mit einer vorzugsweise konzentrierten Wicklung, was auch als Einzahnwicklung bezeichnet wird, ist die Segmentierung möglich.

Ein Segment besteht typischerweise aus einem unabhängigen m-Phasensystem, das von einem Umrichter betrieben wird. Dies bedeutet, dass die von dem Aufzug benötigte Gesamtleistung durch die Anzahl an Segmenten geteilt werden kann. Von jedem einzelnen Umrichter ist nur diese um das Verhältnis Gesamtleistung zu Anzahl der Segmente reduzierte Leistung aufzubringen. Somit ist eine kostengünstigere Herstellung des Antriebs sowie aller in Zusammenhang mit dem Stator und dem Rotor benötigten Bauteile möglich.

Außerdem können kleinere Umrichter einfacher mit höheren Schaltfrequenzen betrieben werden, bspw. möglichst oberhalb von 15 kHz, so dass der Antrieb leiser ist. Je größer die Umrichter werden, desto mehr Probleme verursachen höhere Schaltfrequenzen. Niedrigere Schaltfrequenzen führen zu lauteren Motoren. Ein weiterer Vorteil des segmentierten Aufbaus des Motors des Aufzugantriebs, der in Gebäuden am oder im Aufzugschacht und in der Nähe von bewohnten Räumen angeordnet ist, besteht somit in der verringerten Geräuschentwicklung.

Erfindungsgemäß ist für die Umrichter ein Drehgeber vorgesehen, der über eine zentrale Steuerung die Umrichter ansteuern kann.

Hieraus ergibt sich, dass die sich schnell ändernden Drehgebersignale an alle angeschlossenen Umrichter verteilt werden, um ein zur Steuerung vorgesehenes, übergeordnetes Bussystem zeitlich zu entlasten. Dabei bietet sich an, dass die sogenannten digitalen Inkrementalsignale verteilt werden und die Absolutlage zu geeigneten Zeitpunkten über das Bussystem mitgeteilt wird. Ist die Bandbreite des Bussystems ausreichend hoch, kann selbstverständlich die gesamte Information des Drehgebers über dieses ausgetauscht werden.

Die Synchronisierung der einzelnen Umrichter erfolgt in Ausgestaltung über einen gemeinsamen seriellen Bus. In diesem Fall wird von einer übergeordneten Steuerung (Master) der Sollwert für die Drehzahl und/oder das Drehmoment bzw. den Motorstrom vorgegeben. In den einzelnen Umrichtern wird dann eine Stromregelung der Motorströme durchgeführt, was bspw. im sogenannten d,q-Koordinatensystem erfolgen kann. Dabei kann ein üblicherweise eingesetzter PI-Drehzahlregler in der übergeordneten Steuereinheit implementiert sein. Alternativ dazu kann aber auch nur ein integraler Drehzahlregler in der übergeordneten Steuereinheit vorgesehen sein, wobei der proportionale Anteil des Drehzahlreglers in den einzelnen Umrichtern realisiert wird.

Die Umrichter arbeiten üblicherweise mit einer digitalen Regelung, wobei dann eine Regelungstask mit fester Periodendauer vorhanden ist. Daher ist es vorteilhaft, alle beteiligten Umrichter zeitlich aufeinander zu synchronisieren. Dies kann durch ein Hardwaresignal oder einen geeigneten Telegrammverkehr des gemeinsamen seriellen Bussystems erfolgen.

Erfindungsgemäß eignet sich eine einzige serielle Busverbindung, da dies die Möglichkeit eröffnet, nur diesen einen seriellen Bus mit der erforderlichen "sicheren" Potentialtrennung der Steuerelektronik zu den Leistungstransistoren zu versehen und dadurch die einzelnen Umrichter kostengünstig zu realisieren.

Als serielles Bussystem kann bspw. ein CAN-Bussystem oder ein synchrones serielles Bussystem, üblicherweise als SPI oder SSI bezeichnet, eingesetzt werden. Dabei werden an alle Umrichter von einem Master die Sollwerte für die Drehzahl und die Drehbeschleunigung gesendet. Des weiteren können von dem Master auch die Sollwerte für den drehstrombildenden Strom, den elektrischen Drehwinkel und ggf. die elektrische Drehfrequenz übermittelt werden. Auf diese Weise wird in den Umrichtern eine Stromregelung in den sogenannten d,q-Koordinaten durchgeführt.

In Ausgestaltung ist vorgesehen, dass die einzelnen Umrichter gewünschte Informationen über das Bussystem an den Master rückmelden. Dies geschieht bspw. über die Anforderung an einen bestimmten Umrichter im vorhergehenden Sendetelegramm des Masters, damit die zurückgemeldete Informationen nicht zeitgleich von allen Umrichtern auf das Bussystem gelegt werden. Damit wird nur eine gemeinsame Rückmeldeleitung und nicht für jeden Umrichter eine einzelne Rückmeldeleitung benötigt. Die Rückinformationen unterliegen nicht den zeitlichen Anforderungen wie die Echtzeitinformationen des Mastes an die einzelnen Umrichter. Somit wird die Sendeinformation des Masters im CAN-Bussystem eine hohe Rate ermöglichen. Im SPI der SSI werden für mehrere Umrichter wiederum nur drei Signale benötigt, nämlich synchroner Takt, synchrone Daten vom Master und synchrone Daten zum Master. Derartige SPI- bzw. SSI-Schnittstellen sind heutzutage weitverbreitet. Eine Synchronisation lässt sich insbesondere bei der SPI- bzw. SSI-Schnittstelle leicht erreichen, indem der Beginn eines Übertragungspakets die Synchronisation initiiert.

Der vorgestellte Aufzugantrieb ermöglicht zumindest in den beschriebenen Ausgestaltungen kurze Motorverbindungsleitungen und eine verteilte Wärmeabgabe durch einen "verteilten" Aufbau. Die beschriebene Steuerung ermöglicht zudem, dass alle Umrichter gleichmäßig belastet werden. Insbesondere die Möglichkeit, die Umrichter direkt an dem Elektromotor anzubringen, so dass die Umrichter und der Elektromotor eine Baueinheit bilden, ermöglicht einen kompakten Aufbau, wodurch zusätzlich der Einbau erheblich vereinfacht ist.

Werden Umrichter mit Rückspeisung und schlankem Zwischenkreis eingesetzt, entfällt außerdem der Bremswiderstand. Bei schlanken Zwischenkreisen werden vorzugsweise statt der üblichen Zwischenkreis-Elektrolyt-Kondensatoren Folienkondensatoren mit deutlich geringerer Kapazität verwendet werden, was auch zu einer geringeren Baugröße führt. Darüber hinaus sollten die Umrichter mit einer "sicheren Impulssperre" der Ausgangstransistoren ausgeführt sein.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.
- Figur 1: zeigt einen Ausschnitt aus einer Ausführungsform des erfindungsgemäßen Stators.
- Figur 2: zeigt schematisch die Unterteilung eines Stators in mehrere Segmente.
- Figur 3: zeigt schematisch den Aufbau eines erfindungsgemäßen Antriebs.

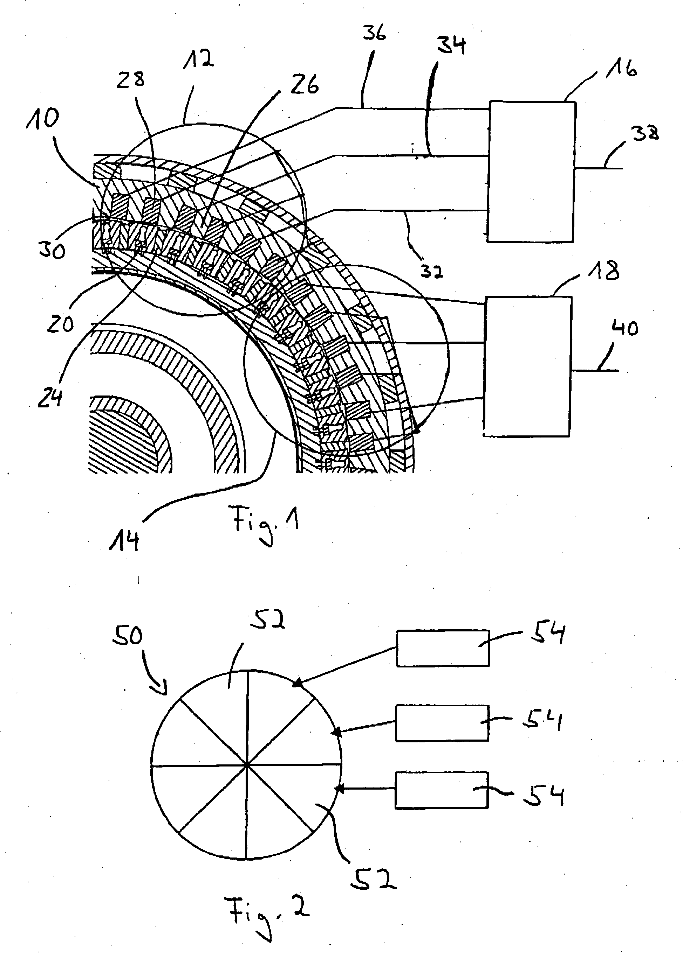

In Figur 1 ist ein Ausschnitt aus einem Stator dargestellt, der insgesamt mit der Bezugsziffer 10 bezeichnet ist. In dem dargestellten Ausschnitt sind umrahmt ein erstes Segment 12 und ein zweites Segment 14 verdeutlicht. Dabei ist dem ersten Segment 12 ein erster Umrichter 16 und dem zweiten Segment 14 ein zweiter Umrichter 18 zugeordnet.

In dem ersten Segment 12 sind Polschuhe 20, Magnete 24, Statorzähne 26 und Spulen 28 zu erkennen. Diese Spulen 28 sind bspw. mit konzentrierter Wicklung als sogenannte Einzahnwicklung ausgebildet. Weiterhin ist eine Statornut 30 dargestellt.

Das erste Segment 12 ist über drei Kabel mit dem ersten Umrichter 16 verbunden, wobei Kabel 32 Phase 1, Kabel 34 Phase 2 und Kabel 36 Phase 3 führen. Der erste Umrichter 16 ist über einen ersten Anschluss 38 ebenso wie der zweite Umrichter 18 über einen zweiten Anschluss 40 mit der Aufzugsteuerung verbunden.

Das zweite Segment 14 ist ein kleinstes Motorsegment mit drei Phasen und je einer Spule für eine Phase. Es sind aber verschiedene Aufteilungen der Wicklungen in Segmente und unterschiedliche Verschaltungsmöglichkeiten der Segmente miteinander realisierbar. So können mehrere Statorzähne in einer Phase umfasst sein oder auch mehrere kleinste Segmente einem Umrichter zugeordnet sein.

In Figur 2 ist das Prinzip der erfindungsgemäßen Aufteilung einer Statorwicklung in Segmente und der Zuordnung von Segmenten zu Umrichtern verdeutlicht. Zu erkennen ist ein schematisch dargestellter Stator 50, der in acht Segmente 52 unterteilt ist. Jedes dieser Segmente 52 ist einem Umrichter 54 zugeordnet, wobei in der Darstellung aus Übersichtlichkeitsgründen lediglich drei Umrichter 54 dargestellt sind.

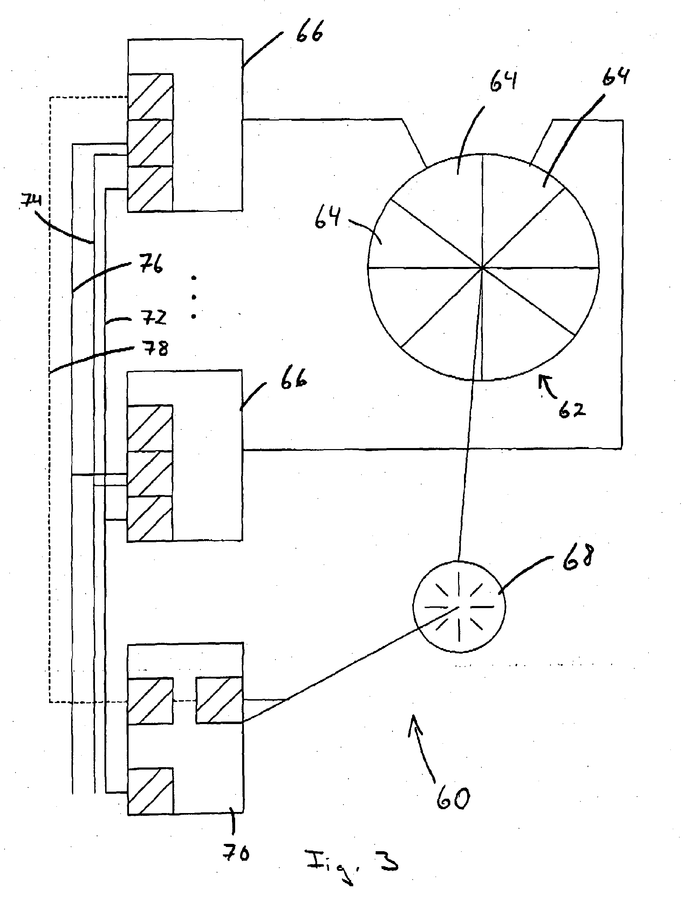

In Figur 3 ist ein erfindungsgemäßer Aufzugantrieb, insgesamt mit der Bezugsziffer 60 bezeichnet, dargestellt.

Die Darstellung zeigt einen Elektromotor 62 mit einer Anzahl an Segmenten 64 und einen Umrichter 66, wobei jedem Segment 64 genau ein Umrichter 66 zugeordnet ist. Zu Verdeutlichung der Darstellung sind lediglich zwei Umrichter 66 wiedergegeben.

Die Drehzahl des Motors 62 wird über einen Drehgeber bzw. Encoder 68 an eine übergeordnete Steuerung (Master) 70, die über ein serielles Bussystem 72 die Umrichter 66 mit den entsprechenden Steuersignalen versorgt, gegeben. Weiterhin sind eine Leitung 74 für eine sichere Impulssperre, eine Leitung 76 für die Versorgungsspannung der Signalelektronik und eine gestrichelt dargestellte Verbindung 78 für eine Encodernachbildung bzw. für Inkrementalsignale gezeigt. In der Darstellung ist der netzseitige Anschluss der Umrichter für den Leistungseingang nicht wiedergegeben.

Bei dem vorgestellten Antrieb besteht grundsätzlich die Möglichkeit, die Umrichter direkt an dem Motor anzubringen, so dass diese eine einzige Baueinheit bilden. Dies erweist sich insbesondere beim Einbau des Antriebs als vorteilhaft, da die kompakte Bauweise einen geringeren Platzbedarf hat. Zudem können die Motorleitungen sehr kurz ausgeführt werden. Insgesamt führt die kompakte Bauweise zu einer geringen elektromagnetischen Störaussendung.

## Patentansprüche

1. Aufzugantrieb mit einem Elektromotor (62), der in eine Anzahl an Segmenten (12, 14, 52, 64) unterteilt ist, wobei jedem Segment (12, 14, 52, 64) ein Umrichter (16, 18, 54, 66) zugeordnet ist, wobei ein Drehgeber (68) für die Umrichter (16, 18, 54, 66) vorgesehen ist, wobei der Drehgeber (68) über eine zentrale Steuerung (70) die Umrichter (16, 16, 54, 66) ansteuert, wobei die Umrichter (16, 18, 54, 66) über eine serielle Busverbindung (72) angesteuert sind, wobei die zentrale Steuerung (70) die Umrichter (16, 18, 54, 66) über die serielle Busverbindung (72) mit Steuersignalen versorgt.

2. Aufzugantrieb nach Anspruch 1, bei dem der Elektromotor (62) einen Rotor und einen Stator (10, 50) aufweist, wobei der Stator (10, 50) in eine Anzahl an Segmenten (12, 14, 52, 64) unterteilt ist und jedem Segment (12, 14, 52, 64) ein Umrichter (16, 18, 54, 66) zugeordnet ist.

3. Aufzugantrieb nach Anspruch 1 oder 2, der als einzahnbewickelter, permanenterregter Synchronmotor ausgebildet ist

4. Aufzugantrieb nach einem der Ansprüche 1 bis 3, bei dem der Stator (10, 50) in Umfangsrichtung in Segmente (12, 14, 52, 64) unterteilt ist.

5. Aufzugantrieb nach einem der Ansprüche 1 bis 4, bei dem die einzelnen Segmente (12, 14, 52, 64) galvanisch und/oder magnetisch voneinander getrennt sind.

6. Aufzugantrieb nach einem der Ansprüche 1 bis 5, bei dem die Umrichter (16, 18, 54, 66) direkt an dem Elektromotor (62) angebracht sind.

7. Aufzugantrieb nach einem der Ansprüche 1 bis 6, bei dem bei den Umrichtern (16, 18, 54, 66) eine Rückspeisung vorgesehen ist.

## Claims

1. Elevator drive having an electric motor (62) which is subdivided into a number of segments (12, 14, 52, 64), each segment (12, 14, 52, 64) being associated with a converter (16, 18, 54, 66), a rotary encoder (68) being provided for the converters (16, 18, 54, 66), the rotary encoder (68) controlling the converters (16, 16, 54, 66) via a central control (70), the converters (16, 18, 54, 66) being controlled via a serial bus connection (72), the central control (70) providing the converters (16, 18, 54, 66) with control signals via the serial bus connection (72).

2. Elevator drive according to claim 1, wherein the electric motor (62) comprises a rotor and a stator (10, 50), the stator (10, 50) being subdivided into a number of segments (12, 14, 52, 64) and each segment (12, 14, 52, 64) being associated with a converter (16, 18, 54, 66).

3. Elevator drive according to claim 1 or 2 which is configured as a permanently excited synchronous motor with a single tooth winding.

4. Elevator drive according to one of claims 1 to 3, wherein the stator (10, 50) is subdivided into segments (12, 14, 52, 64) in the circumferential direction.

5. Elevator drive according to one of claims 1 to 4, wherein the individual segments (12, 14, 52, 64) are galvanically and/or magnetically separated from one another.

6. Elevator drive according to one of claims 1 to 5, wherein the converters (16, 18, 54, 66) are mounted directly on the electric motor (62).

7. Elevator drive according to one of claims 1 to 6, wherein an energy recovery is provided in the converters (16, 18, 54, 66).

## Revendications

1. Entraînement d'ascenseur ayant un moteur électrique (62) qui est subdivisé en un certain nombre de segments (12, 14, 52, 64), chaque segment étant associé à un convertisseur (16, 18, 54, 66), un codeur rotatif (68) étant prévu pour les convertisseurs (16, 18, 54, 66), le codeur rotatif (68) commandant les convertisseurs (16, 16, 54, 66) via une commande centrale (70), les convertisseurs (16, 18, 54, 66) étant commandés via une connexion par bus série (72), la commande centrale (70) les convertisseurs (16, 18, 54, 66) en signaux de commande via la connexion par bus série (72).

2. Entraînement d'ascenseur selon la revendication 1, dans lequel le moteur électrique (62) comporte un rotor et un stator (10, 50), le stator (10, 50) étant subdivisé en un certain nombre de segments (12, 14, 52, 64) et chaque segment (12, 14, 52, 64) étant associé à un convertisseur (16, 18, 54, 66).

3. Entraînement d'ascenseur selon la revendication 1 ou 2 qui est configuré comme un moteur synchrone excité de manière permanente avec un enroulement sur une seule dent.

4. Entraînement d'ascenseur selon l'une des revendications 1 à 3, dans lequel le stator (10, 50) est subdivisé en segments (12, 14, 52, 64) dans la direction circonférentielle.

5. Entraînement d'ascenseur selon l'une des revendications 1 à 4, dans lequel les segments individuels (12, 14, 52, 64) sont séparés les uns des autres de manière galvanique et/ou magnétique.

6. Entraînement d'ascenseur selon l'une des revendications 1 à 5, dans lequel les convertisseurs (16, 18, 54, 66) sont directement montés sur le moteur électrique (62).

7. Entraînement d'ascenseur selon l'une des revendications 1 à 6, dans lequel une récupération de l'énergie est prévu dans les convertisseurs (16, 18, 54, 66).
